# EUROPEAN PATENT APPLICATION

(11) **EP 4 808 276 A1**
(43) Date of publication of application: **16.09.2026**
(21) Application number: 24902444.9
(22) Date of filing: 07.11.2024
(51) Int. Cl.: H04W 88/08, H04W 24/08

(54) **DATA TRANSMISSION METHOD, COMMUNICATION UNIT, AND COMMUNICATION SYSTEM**

(30) Priority: 13.12.2023 CN 202311720268
(71) Applicant: Huawei Technologies Co., Ltd., Shenzhen, Guangdong 518129 (CN)
(72) Inventor: FAN, Guoyong, Shenzhen, Guangdong 518129 (CN); HU, Lianfeng, Shenzhen, Guangdong 518129 (CN); WEI, Zongkun, Shenzhen, Guangdong 518129 (CN)
(74) Representative: Isarpatent
(86) International application number: PCT/CN2024/130426
(87) International publication number: WO 2025/124021

(57) **Abstract**

This application provides a data transmission method, a communication unit, and a communication system, which can be applied to the communication field. The data transmission method can be applied to a second communication unit and includes the following steps: The second communication unit receives first instruction information from a first communication unit; the second communication unit determines first data based on the first instruction information, where the first instruction information indicates a start point of the first data in time-domain data and a size of the first data; and the second communication unit sends the first data to the first communication unit. By transmitting time-domain data in addition to frequency-domain data to the first communication unit, the accuracy of interference information calculation can be improved, thereby enhancing communication quality.

## Description

This application claims priority to Chinese Patent Application No. 202311720268.8, filed with the China National Intellectual Property Administration on December 13, 2023 and entitled "DATA TRANSMISSION METHOD, COMMUNICATION UNIT, AND COMMUNICATION SYSTEM", which is incorporated herein by reference in its entirety.

### TECHNICAL FIELD

This application relates to the communication field, and in particular, to a data transmission method, a communication unit, and a communication system.

### BACKGROUND

To reduce fronthaul traffic, the 3rd generation partnership project (3rd generation partnership project, 3GPP) has proposed a plurality of splitting solutions. Among these solutions, using a remote radio unit (remote radio unit, RRU) to carry part of physical layer functions can reduce data traffic between a baseband unit (baseband unit, BBU) and an RRU. Specifically, the physical layer is divided into two parts: a high-PHY layer and a low-PHY layer. The BBU is configured to carry functions of the high-PHY layer with high real-time requirements, whereas the RRU is configured to carry functions of the low-PHY layer. The functions of the low-PHY layer include fast Fourier transform (fast Fourier transform, FFT) and inverse fast Fourier transform (inverse fast Fourier transform, IFFT). In the uplink direction, the RRU converts time-domain data into frequency-domain via FFT and transmits the frequency-domain data to the BBU. In the downlink direction, the RRU receives frequency-domain data from the BBU, and converts the frequency-domain data into time-domain data via IFFT. In the uplink direction, the BBU can perform interference analysis on the frequency-domain data, and reduce, through interference analysis, interference caused by interference sources to wireless communication between terminal devices and the RRU.

In practice, if the interference analysis performed by the BBU is inaccurate, the communication quality between terminal devices and the RRU is reduced.

### SUMMARY

This application provides a data transmission method, a communication unit, and a communication system. By transmitting time-domain data in addition to frequency-domain data to a first communication unit, the accuracy of interference information calculation can be improved, thereby enhancing communication quality.

According to a first aspect of this application, a data transmission method is provided. The data transmission method can be applied to a second communication unit. The second communication unit may be a radio unit (radio unit, RU), a radio equipment (radio equipment, RE), an RRU, an active antenna unit (active antenna unit, AAU), a remote radio head (remote radio head, RRH), or the like. The data transmission method includes the following steps: The second communication unit receives first instruction information from a first communication unit; the second communication unit determines first data based on the first instruction information, where the first instruction information indicates a start point of the first data in time-domain data and a size of the first data; and the second communication unit sends the first data to the first communication unit.

In an optional manner of the first aspect, the data transmission method further includes the following step: The second communication unit sends frequency-domain data to the first communication unit. The frequency-domain data is data obtained by performing Fourier transform on the time-domain data. The first data and the frequency-domain data are used to perform calculation related to interference analysis.

In an optional manner of the first aspect, the first instruction information further indicates a collection frequency of the first data and/or a compression format of the first data. The second communication unit collects the first data based on the instructed collection frequency. The second communication unit compresses the first data based on the instructed compression format. The collection frequency is instructed, so that matching between the first data and data required by the first communication unit can be improved, thereby avoiding a waste of data and saving communication resources. The compression format is instructed, so that the size of the first data can be reduced, thereby saving the communication resources. Therefore, in this application, communication resources between the second communication unit and the first communication unit can be saved.

In an optional manner of the first aspect, the first data includes N pieces of sub-data. N is an integer greater than 1. The first instruction information further includes a value of N and an interval between two adjacent pieces of sub-data among the N pieces of sub-data. The first instruction information indicates the second communication unit to report data a plurality of times, so that a quantity of times of control information transmission between the second communication unit and the first communication unit can be reduced, thereby saving the communication resources.

In an optional manner of the first aspect, the data transmission method further includes the following step: The second communication unit receives second instruction information from the first communication unit; and the second communication unit stops sending the first data based on the second instruction information. The second instruction information is used to control the second communication unit to stop sending the first data, so that the communication resources between the second communication unit and the first communication unit can be saved when the first communication unit has obtained sufficient time-domain data.

In an optional manner of the first aspect, after receiving the first instruction information from the first communication unit, the data transmission method further includes the following step: The second communication unit sends a response to the first instruction information to the first communication unit. Based on the response to the first instruction information, the first communication unit can prepare in advance for receiving the first data, thereby improving efficiency of communication between the second communication unit and the first communication unit.

In an optional manner of the first aspect, before receiving the first instruction information from the first communication unit, the data transmission method further includes the following steps: The second communication unit receives third instruction information from the first communication unit; and the second communication unit sends reported capability information to the first communication unit based on the third instruction information. Based on the reported capability information, the first communication unit can instruct, based on the first indication information, the first communication unit to report the first data within a capability information range, thereby reducing the quantity of times of control information transmission between the first communication unit and the second communication unit. Therefore, in this application, the communication resources between the second communication unit and the first communication unit can be saved.

In an optional manner of the first aspect, the reported capability information includes any one or more of the following: sending bandwidth, whether fragmentation is supported, and a size of each fragment. Based on the reported capability information, the first communication unit can determine bandwidth for sending the first data by the second communication unit, to determine an appropriate collection frequency or size of the first data, thereby avoiding occupying bandwidth between the first communication unit and the second communication unit for a long time. When the first data is excessively large, fragmentation can avoid occupying the bandwidth between the first communication unit and the second communication unit for a long time. Therefore, in this application, impact of transmitting the first data on communication between two communication units can be reduced.

According to a second aspect of this application, a data transmission method is provided. The data transmission method can be applied to a first communication unit. The first communication unit may be a radio equipment controller (radio equipment controller, REC), a baseband unit (baseband unit, BBU), a building baseband processing unit (building baseband unit, BBU), a distributed unit (distributed unit, DU), or the like. The data transmission method includes the following steps: The first communication unit sends first instruction information to a second communication unit, where the first instruction information indicates a start point of first data in time-domain data and a size of the first data; and the first communication unit receives the first data from the second communication unit.

In an optional manner of the second aspect, the data transmission method further includes the following step: The first communication unit receives frequency-domain data from the second communication unit, where the frequency-domain data is obtained by performing Fourier transform on the time-domain data.

In an optional manner of the second aspect, the first instruction information indicates a collection frequency of the first data and/or a compression format of the first data.

In an optional manner of the second aspect, the first data includes N pieces of sub-data. N is an integer greater than 1. The first instruction information further includes a value of N and an interval between two adjacent pieces of sub-data among the N pieces of sub-data.

In an optional manner of the second aspect, the data transmission method further includes the following step: The first communication unit sends second instruction information to the second communication unit, where the second instruction information indicates to stop sending the first data.

In an optional manner of the second aspect, after sending the first instruction information to the second communication unit, the data transmission method further includes the following step: The first communication unit receives a response to the first instruction information from the second communication unit.

In an optional manner of the second aspect, before sending the first instruction information to the second communication unit, the data transmission method further includes the following step: The first communication unit sends third instruction information to the second communication unit, where the third instruction information indicates to reply with reported capability information.

In an optional manner of the second aspect, the reported capability information includes any one or more of the following: sending bandwidth, whether fragmentation is supported, and a size of each fragment.

According to a third aspect of this application, a second communication unit is provided. The second communication unit includes a receiving unit, a processing unit, and a sending unit. The receiving unit is configured to receive first instruction information from a first communication unit. The processing unit is configured to determine first data based on the first instruction information. The first instruction information indicates a start point of the first data in time-domain data and a size of the first data. The sending unit is configured to send the first data to the first communication unit.

In an optional manner of the third aspect, the sending unit is further configured to send frequency-domain data to the first communication unit, where the frequency-domain data is data obtained by performing Fourier transform on the time-domain data.

In an optional manner of the third aspect, the receiving unit is further configured to receive second instruction information from the first communication unit. The sending unit is further configured to stop sending the first data based on the second instruction information.

In an optional manner of the third aspect, the sending unit is further configured to send a response to the first instruction information to the first communication unit.

In an optional manner of the third aspect, the receiving unit is further configured to receive third instruction information from the first communication unit. The sending unit is further configured to send reported capability information to the first communication unit based on the third instruction information.

According to a fourth aspect of this application, a first communication unit is provided. The first communication unit includes a sending unit and a receiving unit. The sending unit is configured to send first instruction information to a second communication unit. The first instruction information is used to determine a start point of first data in time-domain data and a size of the first data. The receiving unit is configured to receive the first data from the second communication unit.

In an optional manner of the fourth aspect, the receiving unit is further configured to receive frequency-domain data from the second communication unit, where the frequency-domain data is obtained by performing Fourier transform on the time-domain data.

In an optional manner of the fourth aspect, the sending unit is further configured to send second instruction information to the second communication unit, where the second instruction information indicates to stop sending the first data.

In an optional manner of the fourth aspect, the receiving unit is further configured to receive a response to the first instruction information from the second communication unit.

In an optional manner of the fourth aspect, the sending unit is further configured to send third instruction information to the second communication unit, where the third instruction information indicates to reply with reported capability information.

It should be understood that the second communication unit described in the third aspect or any one of the optional manners of the third aspect is similar to the data transmission method described in the first aspect or any one of the optional manners of the first aspect. Therefore, for the second communication unit described in the third aspect or any one of the optional manners of the third aspect, refer to the data transmission method described in the first aspect or any one of the optional manners of the first aspect. Similarly, for the first communication unit described in the fourth aspect or any one of the optional manners of the fourth aspect, refer to the data transmission method described in the second aspect or any one of the optional manners of the second aspect.

According to a fifth aspect of this application, a second communication unit is provided. The second communication unit includes a processor and a transceiver. The transceiver is configured to receive first instruction information from a first communication unit. The processor is configured to determine first data based on the first instruction information, where the first instruction information indicates a start point of the first data in time-domain data and a size of the first data. The transceiver is further configured to send the first data to the first communication unit.

In an optional manner of the fifth aspect, the transceiver is further configured to receive frequency-domain data from the second communication unit, where the frequency-domain data is obtained by performing Fourier transform on the time-domain data.

In an optional manner of the fifth aspect, the transceiver is further configured to send second instruction information to the second communication unit, where the second instruction information indicates to stop sending the first data.

In an optional manner of the fifth aspect, after sending the first instruction information to the second communication unit, the transceiver is further configured to receive a response to the first instruction information from the second communication unit.

In an optional manner of the fifth aspect, before sending the first instruction information to the second communication unit, the transceiver is further configured to send third instruction information to the second communication unit, where the third instruction information indicates to reply with reported capability information.

According to a sixth aspect of this application, a first communication unit is provided. The first communication unit includes a receiver and a transmitter. The transmitter is configured to send first instruction information to a second communication unit. The first instruction information indicates a start point of the first data in time-domain data and a size of the first data. The receiver is configured to receive first data from the second communication unit.

In an optional manner of the sixth aspect, the receiver is further configured to receive frequency-domain data from the second communication unit, where the frequency-domain data is obtained by performing Fourier transform on the time-domain data.

In an optional manner of the sixth aspect, the transmitter is further configured to send second instruction information to the second communication unit, where the second instruction information indicates to stop sending the first data.

In an optional manner of the sixth aspect, the receiver is further configured to receive a response to the first instruction information from the second communication unit.

In an optional manner of the sixth aspect, the transmitter is further configured to send third instruction information to the second communication unit, where the third instruction information indicates to reply with reported capability information.

It should be understood that the second communication unit described in the fifth aspect or any one of the optional manners of the fifth aspect is similar to the data transmission method described in the first aspect or any one of the optional manners of the first aspect. Therefore, for the second communication unit described in the fifth aspect or any one of the optional manners of the fifth aspect, refer to the data transmission method described in the first aspect or any one of the optional manners of the first aspect. Similarly, for the first communication unit described in the sixth aspect or any one of the optional manners of the sixth aspect, refer to the data transmission method described in the second aspect or any one of the optional manners of the second aspect.

According to a seventh aspect of this application, a communication system is provided. The communication system includes the second communication unit described in the fifth aspect or any one of the optional manners of the fifth aspect and the first communication unit described in the sixth aspect or any one of the optional manners of the sixth aspect.

According to an eighth aspect of this application, a chip is provided. The chip includes a processing circuit, and the processing circuit is configured to perform the data transmission method described in any one of the first aspect, the optional manners of the first aspect, the second aspect, or the optional manners of the second aspect.

According to a ninth aspect of this application, a computer-readable storage medium is provided. The medium stores instructions, and when the instructions are executed by a computer, the data transmission method described in any one of the first aspect, the optional manners of the first aspect, the second aspect, or the optional manners of the second aspect is implemented.

According to a tenth aspect of this application, a computer program product is provided. The computer program product includes instructions, and when the instructions are run on a computer, the computer is enabled to perform the data transmission method described in any one of the first aspect, the optional manners of the first aspect, the second aspect, or the optional manners of the second aspect.

For technical effect brought by any optional manner in the second aspect to the tenth aspect, refer to the technical effect brought by different optional manners in the first aspect. Details are not described herein again.

### BRIEF DESCRIPTION OF DRAWINGS

FIG. 1 is a diagram of a structure of a wireless communication system;
FIG. 2 is a diagram of a structure of a radio access network device;
FIG. 3 is a diagram of an architecture of a radio access network device;
FIG. 4 is a first schematic flowchart of a data transmission method according to an embodiment of this application;
FIG. 5 is a second schematic flowchart of a data transmission method according to an embodiment of this application;
FIG. 6 is a diagram of a structure of a second communication unit according to an embodiment of this application;
FIG. 7 is a diagram of a structure of a first communication unit according to an embodiment of this application;
FIG. 8 is a diagram of a structure of a communication apparatus according to an embodiment of this application; and
FIG. 9 is a diagram of a structure of a communication system according to this application.

### DESCRIPTION OF EMBODIMENTS

The following describes technical solutions of this application with reference to accompanying drawings. All other solutions obtained by a person skilled in the art based on this application without creative efforts shall fall within the protection scope of this application.

Some terms in this application are first described, so as to help a person skilled in the art have a better understanding.
(1) A terminal device may be a wireless terminal device that can receive scheduling and indication information of a network device. The wireless terminal device may be a device that provides a user with voice and/or data connectivity, or a handheld device with a wireless connection function, or another processing device connected to a wireless modem.

The terminal device may communicate with one or more core networks or the internet through a radio access network (radio access network, RAN). The terminal device may also be referred to as a terminal, a user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), an internet of things (internet of things, IOT), ultra-reliable ultra-low latency communication (ultra-reliable low-latency communication, URLLC), virtual reality, augmented reality, industrial control, autonomous driving, telemedicine, a smart grid, smart furniture, a smart office, a smart wearable device, smart transportation, a smart city, or satellite communication. The terminal may be a mobile phone, a tablet computer, a computer with a wireless transceiver function, a wearable device, a vehicle, an uncrewed aerial vehicle, a helicopter, an airplane, a hot-air balloon, a ship, a robot, a mechanical arm, a smart home device, or the like. A form of the terminal device is not limited in embodiments of this application.

In this application, an apparatus configured to implement functions of the terminal device may be a terminal device, or may be an apparatus that can support the terminal device in implementing the function, for example, a processor, a circuit, a chip, or a chip system. The apparatus may be mounted in the terminal device or connected to the terminal device for use. In the technical solutions provided in this application, an example in which the apparatus configured to implement the function of the terminal device is the terminal device is used to describe the technical solutions provided in this application.

(2) A network device may be a device in a wireless network. For example, the network device may be a radio access network (radio access network, RAN) node (or device) that connects a terminal device to the wireless network. Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement functions of the network device may be a network device, or may be an apparatus that can support the network device in implementing the function, for example, a processor, a circuit, a chip, or a chip system. The apparatus may be mounted in the network device or connected to the network device for use. In the technical solutions provided in this application, an example in which the apparatus configured to implement the function of the network device is the network device is used to describe the technical solutions provided in this application.

(3) The terms "system" and "network" may be used interchangeably in this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in this application are used to distinguish between a plurality of objects, but are not used to limit a sequence, a time sequence, priorities, or importance of the plurality of objects.

This application may be applied to various possible communication systems. For example, this application may be applied to a long term evolution (long term evolution, LTE) system, a new radio (new radio, NR) system, an open access network (open RAN, O-RAN or ORAN), a cloud radio access network (cloud radio access network, CRAN), or a new radio vehicle to everything (NR vehicle to everything, NR V2X) system. Alternatively, this application may be applied to a system in hybrid networking of a plurality of access technologies (for example, LTE and 5G). Alternatively, this application may be applied to a device-to-device (device-to-device, D2D) communication system, a machine-to-machine (machine-to-machine, M2M) communication system, internet of things (Internet of Things, IoT), or an uncrewed aerial vehicle communication system.

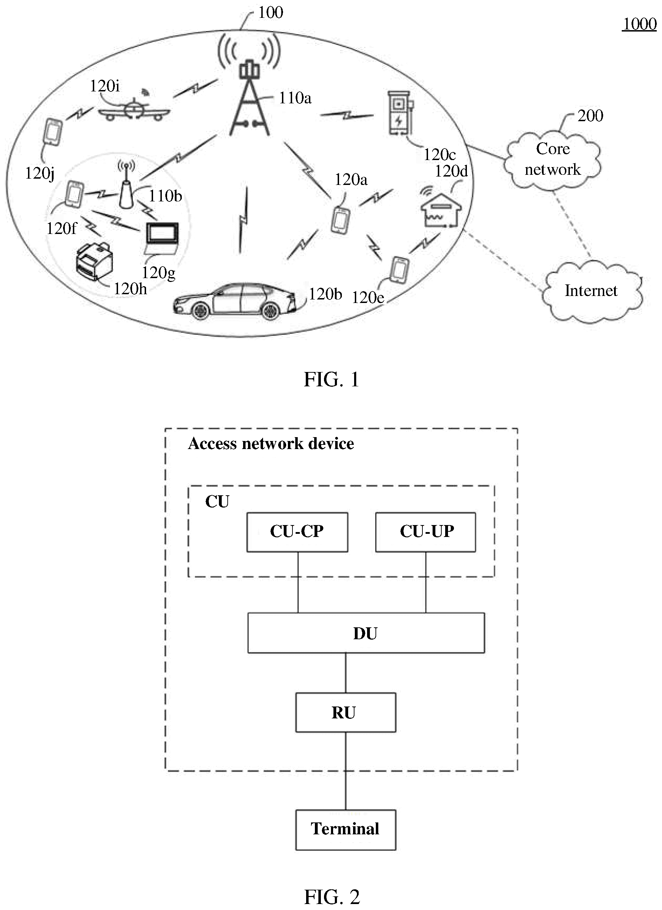

FIG. 1 is a diagram of a structure of a wireless communication system. As shown in FIG. 1, FIG. 1 is a diagram of a possible and non-limiting application scenario according to this application. The solution provided in this application can be applied to a wireless communication system 1000 shown in FIG. 1. As shown in FIG. 1, the wireless communication system 1000 includes a radio access network (radio access network, RAN) 100 and a core network 200. The radio access network 100 may include at least one radio access network device (for example, 110a and 110b in FIG. 1, collectively referred to as 110). The radio access network 100 may further include at least one terminal (for example, 120a to 120j in FIG. 1, collectively referred to as 120). The terminals 120a to 120j may be connected to the radio access network device 110 in a wireless manner. The radio access network 100 may further include another radio access network device, for example, a wireless relay device and/or a wireless backhaul device (not shown in FIG. 1). The radio access network device 110 is connected to the core network 200 in a wireless or wired manner. A core network device in the core network and a radio access network device in the radio access network may be different physical devices, or may be a same physical device that integrates a logical function of the core network and a logical function of the radio access network. This is not limited Terminals may be connected to each other in a wireless manner. Radio access network devices may be connected to each other in a wired or wireless manner.

For example, in FIG. 1, the radio access network 100 may be configured as a cellular system related to the 3rd generation partnership project (3rd generation partnership project, 3GPP). For example, the radio access network 100 may be configured as a 4th generation (4th generation, 4G) mobile communication system, a 5th generation (5th generation, 5G) mobile communication system, or a future-oriented evolved system (for example, a 6G mobile communication system). Alternatively, the radio access network 100 may be an open radio access network (open RAN, O-RAN or ORAN), or a cloud radio access network (cloud radio access network, CRAN). Alternatively, the radio access network 100 may be a communication system integrating the foregoing two or more systems.

The radio access network device 110 may also be sometimes referred to as a radio access network node, a radio access network entity, an access node, or the like, and forms a part of a communication system, to help a terminal implement radio access. A plurality of radio access network devices 110 in the communication system 1000 may be nodes of a same type, or may be nodes of different types. In some scenarios, roles of the radio access network device 110 and the terminal 120 are relative. For example, a network element 120i in FIG. 1 may be a helicopter or an uncrewed aerial vehicle, and may be configured as a mobile base station. For the terminal 120j that accesses the radio access network 100 through the network element 120i, the network element 120i is a base station. However, for the base station 110a, the network element 120i is a terminal. Both the radio access network device 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access node in a base station in a future mobile communication system, or the like. The radio access network device may be a macro base station (for example, 110a in FIG. 1), a micro base station or an indoor station (for example, 110b in FIG. 1), a relay node or a donor node, or a radio controller in a CRAN scenario. Optionally, the radio access network device may alternatively be a server, a wearable device, a vehicle-mounted device, or the like. For example, a radio access network device in a vehicle to everything (vehicle to everything, V2X) technology may be a road side unit (road side unit, RSU). A plurality of radio access network devices in the communication system may be base stations of a same type, or may be base stations of different types. The base station may communicate with the terminal, or may communicate with the terminal through a relay station.

In practice, a plurality of radio access network devices can cooperate to assist the terminal in implementing radio access, and different radio access network devices separately implement a part of functions of the base station. For example, the radio access network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module. The CU (or the CU-CP and the CU-UP), the DU, and the RU can implement different protocol layer functions.

Communication between the radio access network device and the terminal device may comply with a specific protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

FIG. 2 is a diagram of a structure of a radio access network device. In an implementation example, as shown in FIG. 2, the radio access network device may include at least one CU and at least one DU. This design may be referred to as CU-DU separation. One CU may be connected to one or more DUs. The CU and the DU may be divided based on a protocol layer of a wireless network. For example, functions of a PDCP layer and a protocol layer (for example, an RRC layer and an SDAP layer) above the PDCP layer are set on the CU, and functions of a protocol layer (for example, an RLC layer, a MAC layer, and a PHY layer) below the PDCP layer are set on the DU. For another example, the functions of the protocol layer above the PDCP layer are set on the CU, and the functions of the protocol layer below the PDCP layer are set on the DU. This is not limited. When the CU includes the CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer. Names of the CU and the DU are not limited in this application. For example, the CU may be referred to as a third communication unit, and the DU may be referred to as a first communication unit.

The division into processing functions of the CU and the DU based on protocol layers is merely an example, and may be division in another manner. For example, the CU or the DU may have functions of more protocol layers through division, or the CU or the DU may have some processing functions of the protocol layers through division. For example, part of functions of the RLC layer and functions of a protocol layer above the RLC layer are set on the CU, and remaining functions of the RLC layer and functions of a protocol layer below the RLC layer are set on the DU. For another example, the functions of the CU or the DU may be divided based on service types or other system requirements. For example, division may be performed based on latencies. Functions whose processing time needs to satisfy a low-latency requirement are set on the DU, and functions whose processing time does not need to satisfy the latency requirement are set on the CU.

The CU may be connected to the core network. Optionally, the CU may have some functions of the core network.

Further, some functions of the DU may be set separately. As shown in FIG. 2, some functions may be implemented by a radio unit (radio unit, RU). The RU may have a radio frequency function. A name of the RU is not limited in this application. For example, the RU may be referred to as a second communication unit. The DU and the RU may be split or separated at the PHY layer. For example, the DU may implement a higher-layer function of the PHY layer, and the RU may implement a lower-layer function of the PHY layer or implement the lower-layer function and the radio frequency function. The higher-layer function of the PHY layer includes functions closer to the MAC layer, and the lower-layer function of the PHY layer includes functions closer to a radio frequency. For example, the higher-layer function of the PHY layer includes one or more of the following: forward error correction (forward error correction, FEC) encoding/decoding, scrambling, or modulation/demodulation. The lower-layer function of the PHY layer includes one or more of the following: fast Fourier transform (fast Fourier transform, FFT)/inverse fast Fourier transform (inverse fast Fourier transform, IFFT), beamforming, extraction and filtering of a physical random access channel (physical random access channel, PRACH), or the like. The RU may perform radio frequency signal communication with the terminal device through an air interface. A pre-encoding function of the PHY layer may be in the DU or the RU. There may be various possible manners of splitting the DU and the RU. This is not limited.

There is an interface between the DU and the RU. For example, based on different splitting manners, the interface between the DU and the RU may be a common public radio interface (common public radio interface, CPRI) or an enhanced common public radio interface (enhanced common public radio interface, eCPRI).

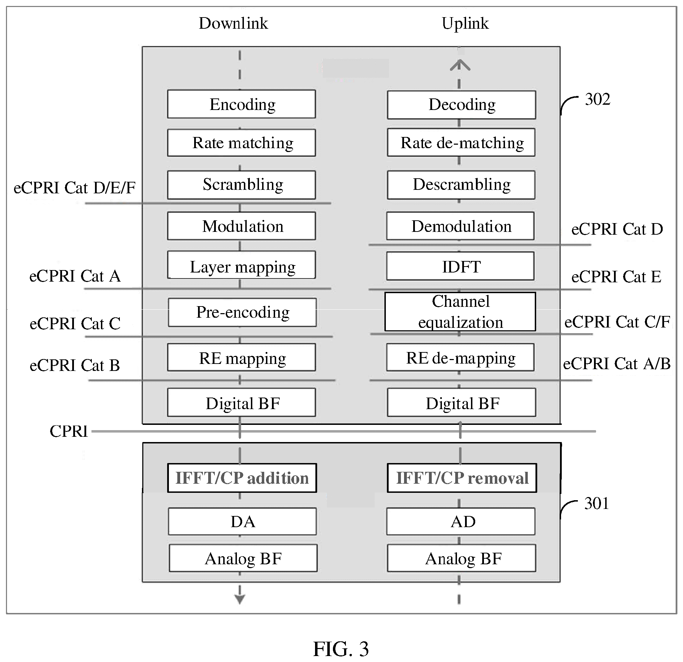

FIG. 3 is a diagram of an architecture of a radio access network device according to an embodiment of this application. As shown in FIG. 3, the radio access network device includes an RU 301 and a DU 302. In the downlink direction, the DU 302 includes the following functions: encoding, rate matching, scrambling, modulation, layer mapping, pre-encoding, resource element (resource element, RE) mapping, and digital beamforming (beamforming, BF). In the uplink direction, the DU 302 includes the following functions: digital BF, RE de-mapping, channel equalization (or channel estimation), inverse discrete Fourier transform (inverse discrete fourier transform, IDFT), demodulation, descrambling, rate de-matching, and decoding. In the downlink direction, the RU 301 includes the following functions: IFFT/cyclic prefix (cyclic prefix, CP) addition, digital-to-analog (digital-to-analog, DA) conversion, and analog BF. In the uplink direction, the RU 301 includes the following functions: analog BF, analog-to-digital (analog-to-digital, AD) conversion, and FFT/CP removal. It should be understood that FIG. 3 shows a physical layer function of the DU 302. In practice, the DU 302 can further have functions of a MAC layer and an IP layer.

Any one or more functions implemented by the RU 301 and the DU 302 may be implemented by using software, hardware, or a combination of software and hardware. The RU 301 and the DU 302 may be physically discrete, or may be integrated. In practice, the RU 301 and the DU 302 can further implement other functions. For example, the DU 302 is further configured to implement scheduling, power control, hybrid automatic repeat request (hybrid automatic repeat request, HARQ), flow control, mobility management, or artificial intelligence (artificial intelligence, AI). In practice, the RU 301 and the DU 302 may not include a functional module shown in FIG. 3. For example, the DU 302 is not configured to implement digital BF. The radio access network device further includes a fronthaul (fronthaul, FH) interface between the RU 301 and the DU 302, to implement communication between the RU 301 and the DU 302. The fronthaul interface includes but is not limited to a CPRI or an eCPRI. In a possible implementation, the DU 302 is located in a BBU, the RU 301 is located in an RRU/AAU/RRH, and an interface between the BBU and the RRU/AAU/RRH may also be referred to as a fronthaul interface. To implement a fronthaul interface, the BBU and the RRU/AAU/RRH may be connected through a fronthaul network, or the RU 301 and the DU 302 may be connected through a fronthaul network. For example, the fronthaul network includes but is not limited to a direct fiber connection and a wavelength division multiplexing network.

The radio access network device may support one or more types of fronthaul interfaces, and different fronthaul interfaces correspond to DUs and RUs that have different functions. As shown in FIG. 3, if the fronthaul interface between the RU 301 and the DU 302 is the CPRI, the DU 302 is configured to implement one or more of baseband functions, and the RU 301 is configured to implement one or more of radio frequency functions. If the fronthaul interface between the RU 301 and the DU 302 is the eCPRI, it involves moving a part of downlink and/or uplink baseband functions from the DU 302 to the RU 301 for implementation, as compared to the CPRI. Different manners of splitting the RU 301 and the DU 302 correspond to eCPRIs of different categories (category, Cat for short). FIG. 3 provides an example of six eCPRIs, which are represented by Cat A, Cat B, Cat C, Cat D, Cat E, and Cat F (which may also be represented as Option A to Option F, Option 1 to Option 6, or other designations). It may be understood that there may be another manner of splitting the RU 301 and the DU 302, that is, there may be an eCPRI of another category.

The eCPRI Cat A is used as an example. For downlink transmission, layer mapping is used for splitting. The DU is configured to implement layer mapping and one or more previous functions (to be specific, one or more of encoding, rate matching, scrambling, modulation, and layer mapping), and other functions (for example, one or more of RE mapping, digital BF, or IFFT/CP addition) after the layer mapping are moved to the RU for implementation. For uplink transmission, RE de-mapping is used for splitting. The DU 302 is configured to implement de-mapping and one or more previous functions (to be specific, one or more of decoding, rate de-matching, descrambling, demodulation, IDFT, channel equalization, and RE de-mapping), and other functions (for example, one or more of digital BF or FFT/CP removal) after de-mapping are moved to the RU for implementation.

Similarly, the eCPRI Cat B, the eCPRI Cat C, the eCPRI Cat D, the eCPRI Cat E, and the eCPRI Cat F respectively correspond to different manners of splitting between the DU and the RU. A splitting point and functions before the splitting point are implemented by the DU, and functions after the splitting point is implemented by the RU. For splitting points for eCPRIs of various categories, refer to FIG. 3. Details are not described. For example, for the eCPRI Cat B, RE mapping is used for splitting for downlink transmission, and RE de-mapping is used for splitting for uplink transmission. For uplink transmission, the RE mapping and functions before the RE mapping are implemented by the DU, and functions after the RE mapping and a radio frequency function are implemented by the RU. For downlink transmission, the RE de-mapping and functions before the RE de-mapping are implemented by the DU, and functions after the RE de-mapping and a radio frequency function are implemented by the RU.

Splitting manners for the eCPRIs may be symmetric for an uplink and a downlink, for example, for the eCPRI Cat B and the eCPRI Cat C shown in FIG. 3. Alternatively, splitting manners for the eCPRIs may be asymmetric for an uplink and a downlink, for example, for the eCPRI Cat A, the eCPRI Cat D, the eCPRI Cat E, and the eCPRI Cat F shown in FIG. 3. This is not limited. Optionally, for the uplink and/or the downlink, different splitting manners may be configured for different channels or different channel groups, that is, different categories of eCPRIs are configured. One group of channels may include one or more channels.

In a possible design, the DU is located in the BBU, the RU is located in the RRU/AAU/RRH, a processing unit, in the BBU, configured to implement a baseband function is referred to as a baseband high (baseband high, BBH) unit, and a processing unit, in the RRU/AAU/RRH, configured to implement a baseband function is referred to as a baseband low (baseband low, BBL) unit.

In the example of FIG. 3, the RU 301 is configured to implement the FFT and the IFFT. Therefore, in the uplink direction, the RU 301 is configured to receive a wireless signal from the terminal device, and convert the wireless signal into an analog electrical signal. The RU 301 is further configured to convert the analog electrical signal into a digital electrical signal, where the digital electrical signal is time-domain data. The RU 301 is further configured to convert the time-domain data into frequency-domain data through FFT, and transmit the frequency-domain data to the DU 302. The DU 302 can perform interference analysis on the frequency-domain data, and reduce, through interference analysis, interference caused by an interference source to wireless communication between the terminal device and the RU 301. In practice, when interference analysis of the DU 302 is inaccurate, the communication quality between the terminal device and the RU 301 is reduced.

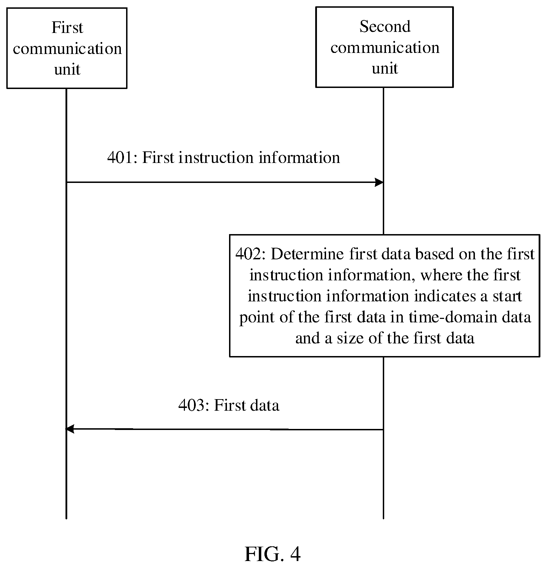

Therefore, this application provides a data transmission method. FIG. 4 is a first schematic flowchart of a data transmission method according to an embodiment of this application. As shown in FIG. 4, the data transmission method includes the following steps.

In step 401, a first communication unit sends first instruction information to a second communication unit.

Both the first communication unit and the second communication unit can be referred to as radio access network devices. For example, the second communication unit is an RE, and the first communication unit is an REC. For another example, the second communication unit is an RRU, and the first communication unit is a BBU. For another example, the second communication unit is an AAU, and the first communication unit is a BBU. For another example, the second communication unit is an RU, and the first communication unit is a DU. A link between the first communication unit and the second communication unit may be referred to as a fronthaul link, a fronthaul network, or the like. A communication interface between the first communication unit and the second communication unit may be referred to as a CPRI interface, an eCPRI interface, a fronthaul interface in an open radio access network (open radio access network, ORAN or O-RAN), or another interface name. This is not limited herein. The first communication unit sends the first instruction information to the second communication unit. When the communication interface between the first communication unit and the second communication unit is the CPRI interface, the first instruction information may be a CPRI frame. When the communication interface between the first communication unit and the second communication unit is the eCPRI interface, the first instruction information may be an eCPRI frame.

In step 402, the second communication unit determines first data based on the first instruction information, where the first instruction information indicates a start point of the first data in time-domain data and a size of the first data.

The second communication unit includes an antenna. The second communication unit receives an uplink wireless signal from the terminal device through the antenna, and converts the uplink wireless signal into an uplink electrical signal. The uplink electrical signal is the time-domain data. The time-domain data is also referred to as sampled data or sampled symbols. The second communication unit includes an FFT processing unit. The second communication unit performs Fourier transform on the time-domain data by using the FFT processing unit, to obtain frequency-domain data. Therefore, the time-domain data is also referred to as pre- Fourier-transform data, and the frequency-domain data is also referred to as post-Fourier-transform data. The second communication unit can intermittently or continuously receive the uplink wireless signal from the terminal device. Therefore, the second communication unit can obtain a data stream of the time-domain data. The first instruction information indicates the start point of the first data in the time-domain data and the size of the first data. For example, when the time-domain data is a data stream including new radio (new radio, NR) frames, the first instruction information can include a start frame number of the NR frames and a quantity of NR frames. The second communication unit can obtain corresponding data, namely, the first data, from the data stream based on the start frame number of the NR frames and the quantity of NR frames.

It should be understood that the first instruction information including the start frame number of the NR frames and the quantity of NR frames is merely an example provided in this embodiment of this application. In practice, the first instruction information can include other content, and the second communication unit determines the start point of the first data in the time-domain data and the size of the first data based on the other content. For example, the first instruction information can include a start frame number of the NR frames and an end frame number of the NR frames. For another example, the first instruction information includes a start frame number and a start subframe number. The second communication unit uses the start frame number and the start subframe number to determine the start point of the first data. The first instruction information further includes an end frame number and an end subframe number. The second communication unit determines an end point of the first data based on the end frame number and the end subframe number. For another example, the first instruction information includes a start frame number, a start subframe number, and a start symbol. The second communication unit determines the start point of the first data based on the start frame number, the start subframe number, and the start symbol. The first instruction information further includes an end frame number, an end subframe number, and an end symbol. The second communication unit determines the end point of the first data based on the end frame number, the end subframe number, and the end symbol.

In step 403, the second communication unit sends the first data to the first communication unit.

It can be learned from the foregoing description of step 402 that the second communication unit performs Fourier transform on the time-domain data by using the FFT processing unit, to obtain the frequency-domain data. The second communication unit transmits the frequency-domain data to the first communication unit. It should be understood that, according to a specific splitting solution, the second communication unit can further perform corresponding processing on the frequency-domain data. For example, in the Cat A splitting solution in FIG. 3, the second communication unit is further configured to perform digital BF processing on the frequency-domain data. For another example, in the Cat D splitting solution in FIG. 3, the second communication unit is further configured to perform digital BF processing, RE de-mapping processing, channel equalization processing, and IDFT processing on the frequency-domain data.

The first data is obtained by the second communication unit from the time-domain data. The second communication unit does not perform Fourier transform on the obtained first data. The second communication unit sends the first data to the first communication unit. When the communication interface between the first communication unit and the second communication unit is the CPRI interface, the first data can be located in a data part of the CPRI frame. When the communication interface between the first communication unit and the second communication unit is the eCPRI interface, the first data can be located in a data part of the eCPRI frame.

The first data and the frequency-domain data are used for interference analysis. It can be learned from the foregoing description of step 401 that the second communication unit transmits a signal to the terminal device wirelessly. Interference caused by an interference source to wireless communication between the terminal device and the second communication unit can be reduced through interference analysis. The first communication unit can perform interference analysis based on the first data and the frequency-domain data. For example, the first communication unit determines second data that is in the frequency-domain data and that corresponds to the first data, and performs data analysis on the first data and the second data, to determine impact of a wireless interference source between the terminal device and the second communication unit on wireless communication. After the impact of wireless communication is determined, a wireless network between the terminal device and the second communication unit can be checked. In practice, the first communication unit can alternatively send the first data and the second data to another device. The another device performs interference analysis based on the first data and the second data. The another device may be a CU, a server, or the like.

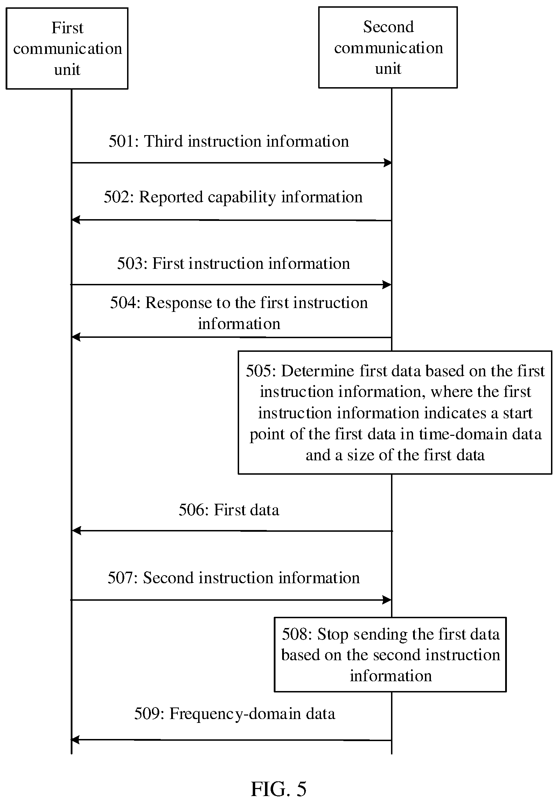

FIG. 5 is a second schematic flowchart of a data transmission method according to an embodiment of this application. As shown in FIG. 5, the data transmission method includes the following steps.

In step 501, a first communication unit sends third instruction information to a second communication unit.

For descriptions of the first communication unit and the second communication unit, refer to the description of step 401 in FIG. 4. The first communication unit sends the third instruction information to the second communication unit. The third instruction information indicates to reply with reported capability information. The third instruction information may be a CPRI frame, an eCPRI frame, or the like. A format of the third instruction information and carried content are not limited in this embodiment of this application.

In step 502, the second communication unit sends the reported capability information to the first communication unit.

The reported capability information may include whether a time-domain data collection capability is supported. It can be learned from the foregoing description of FIG. 4 that the second communication unit transmits frequency-domain data to the first communication unit. Time-domain data is used as processing data in a process in which the second communication unit obtains the frequency-domain data, and may be directly discarded by the second communication unit. Alternatively, the second communication unit may not have a capability of processing data in a collection process. Therefore, the reported capability information can include whether the time-domain data collection capability is supported. When the reported capability information represents that the second communication unit does not support the time-domain data collection capability, the first communication unit can abandon obtaining the first data from the second communication unit. When the reported capability information represents that the second communication unit supports the time-domain data collection capability, the first communication unit performs step 503.

When the reported capability information represents that the second communication unit supports the time-domain data collection capability, the reported capability information may further include any one or more of the following content: a collection frequency, a collection period, transmit bandwidth, a compression format, whether fragmentation being supported, a quantity of fragmentation times, and a size of each fragment. The following separately describes each of the foregoing content.

The collection frequency is a frequency supported by the second communication unit to collect the first data, and is also referred to as a physical layer basic time unit. For example, the second communication unit can support to collect the first data at a collection frequency A. In this case, an interval between two sampling points in the collected first data is A. The second communication unit can report a plurality of collection densities, indicating that the second communication unit supports to obtain the first data at a plurality of collection densities. It should be understood that the collection frequency for collecting the first data by the second communication unit may be the same as or different from a collection frequency of the time-domain data obtained by the second communication unit. For example, the collection frequency of the time-domain data is A, and the collection frequency of the first data is B.

The collection period is the maximum duration supported by the second communication unit to collect the first data, namely, an interval between a first sampling point and a last sampling point in the first data. When collection periods are the same, a smaller collection frequency indicates larger first data obtained by the second communication unit, and a larger collection frequency indicates smaller first data obtained by the second communication unit.

The sending bandwidth is a bandwidth used by the second communication unit to send the first data. It can be learned from the foregoing description of step 403 in FIG. 4 that the second communication unit further needs to send the frequency-domain data to the first communication unit. Therefore, the frequency-domain data occupies bandwidth between the second communication unit and the first communication unit. The bandwidth occupied by the frequency-domain data may further depend on a data amount of uplink data of the terminal device. To reduce impact of transmitting the first data on transmitting the frequency-domain data, the second communication unit can transmit the first data by using only remaining bandwidth.

The compression format is a format supported by the second communication unit to compress the first data. For example, digital automation gain control (digital automation gain control, DAGC) compression. The first data is compressed, an amount of data transmitted between the second communication unit and the first communication unit can be reduced.

Whether fragmentation is supported means whether the second communication unit can fragment the first data obtained in one collection period. When the second communication unit supports fragmentation, the second communication unit can fragment the first data obtained in one collection period. The quantity of fragmentation times is an upper limit of a quantity of fragments supported by the second communication unit. For example, the second communication unit is configured to fragment the first data to obtain a maximum of five pieces of fragmented data. In this case, the maximum quantity of fragments is 5. The size of each fragment may be an upper limit of the size of each fragment, or may be a size interval of the size of each fragment.

In step 503, the first communication unit sends first instruction information to the second communication unit.

The description of step 503 is similar to the description of step 401 in FIG. 4. Therefore, for a description of step 503, refer to the description of step 401 in FIG. 4. The first communication unit can obtain the first instruction information based on the capability information reported by the second communication unit. For example, the collection frequency reported by the second communication unit includes the collection frequency A and the collection frequency B. The first communication unit includes, in the first instruction information, an identifier of the collection frequency A, to indicate the first communication unit to collect the first data based on the collection frequency A. For another example, the first communication unit includes, in the first instruction information, information about a quantity of fragmentation times and a fragment size, to indicate the second communication unit to fragment the collected first data.

In step 504, the second communication unit sends a response to the first instruction information to the first communication unit.

The response to the first instruction information includes a failure response or a success response. When the second communication unit is abnormal or the first instruction information carries report information that is not supported by the second communication unit, the second communication unit sends the failure response to the first instruction information to the first communication unit. For example, the first instruction information indicates the second communication unit to collect the first data at a collection frequency C. The second communication unit supports collecting the first data only at the collection frequency A or the collection frequency B. The second communication unit sends the failure response to the first communication unit. The failure response can carry a failure cause. In practice, when the first instruction information carries the report information that is not supported by the second communication unit, the second communication unit may upload a part of data. For example, the collection period instructed in the first instruction information is greater than the maximum duration supported by the second communication unit to collect the first data, and the second communication unit collects the first data by using the maximum duration, as the collection period, supported to collect the first data. In this case, the first data obtained by the second communication unit is a part of data that the first communication unit needs to obtain. The second communication unit can indicate, in the failure response, a location and a size of the actually transmitted first data in the time-domain data. When the second communication unit supports all the report information instructed by the first instruction information, the second communication unit sends the success response to the first instruction information to the first communication unit. The success response can carry related information of transmitting the first data by the second communication unit, for example, a time at which the second communication unit starts to transmit the first data or a location of the first data in the CPRI frame.

In step 505, the second communication unit determines the first data based on the first instruction information, where the first instruction information indicates a start point of the first data in time-domain data and a size of the first data.

The description of step 505 is similar to the description of step 402 in FIG. 4. Therefore, for a description of step 505, refer to the description of step 402 in FIG. 4. The first instruction information indicates the start point of the first data in the time-domain data and the size of the first data. The first instruction information may further instruct a collection period, a collection frequency, a compression format, whether being fragmented, or the like. The second communication unit collects the first data based on the collection period and the collection frequency that are instructed by the first instruction information, and compresses the first data based on the compression format instructed by the first instruction information. When the first indication information indicates to perform fragmentation, the quantity of fragmentation times, and the size of each fragment, the second communication unit is configured to fragment the obtained first data based on the quantity of fragmentation times and the size of each fragment that are instructed by the first indication information, to obtain a plurality of pieces of fragmented data. The second communication unit sends the plurality of pieces of fragmented data to the first communication unit. The second communication unit can continuously or discontinuously send the plurality of pieces of fragmented data to the first communication unit. In the discontinuous sending manner, to distinguish different fragmented data, each piece of fragmented data in the plurality of pieces of fragmented data can be located in different CPRI frames, that is, a same CPRI frame does not include different fragmented data. In the continuous sending manner, to save transmission resources, a same CPRI frame can alternatively include different fragmented data. In this case, different fragmented data may be isolated by using an interval field.

In practice, the first communication unit may need to obtain a plurality of pieces of sub-data with intervals. In this case, the first data includes N pieces of sub-data. To reduce a quantity of times of control information transmission between the second communication unit and the first communication unit, the first instruction information further includes a value of N and an interval between two adjacent pieces of sub-data among the N pieces of sub-data. N is an integer greater than 1. The interval between two adjacent pieces of sub-data is an interval between a last sampling point in a first piece of sub-data and a first sampling point in a second piece of sub-data. The two adjacent pieces of sub-data include a first piece of sub-data and a second piece of sub-data. Each piece of sub-data may correspond to a collection period, a collection frequency, a compression format, or whether being fragmented. For example, the plurality of pieces of sub-data include first sub-data and second sub-data. The first sub-data includes a corresponding collection period 1, a collection frequency A, a first compression format, and a first quantity of fragmentation times. The second sub-data includes a corresponding collection period 2, a collection frequency B, a second compression format, and a second quantity of fragmentation times. The second communication unit collects the first sub-data based on the collection period 1 and the collection frequency A, fragments the first sub-data based on the first quantity of fragmentation times, and compresses the fragmented data based on the first compression format. The second communication unit collects the second sub-data based on the collection period 2 and the collection frequency B, fragments the second sub-data based on the second quantity of fragmentation times, and compresses the fragmented data based on the second compression format. The plurality of pieces of sub-data may alternatively have a unified collection period, a unified collection frequency, a unified compression format, unified fragmentation, or the like. For example, the second communication unit collects N pieces of sub-data based on a same collection period and collection frequency, fragments the N pieces of sub-data based on a same quantity of fragmentation times, and compresses the fragmented data based on a same compression format.

In step 506, the second communication unit sends the first data to the first communication unit.

The description of step 506 is similar to the description of step 403 in FIG. 4. Therefore, for a description of step 506, refer to the description of step 403 in FIG. 4. When the first data includes the N pieces of sub-data, the second communication unit can continuously or discontinuously send the N pieces of sub-data to the first communication unit. In the discontinuous sending manner, to distinguish between different N pieces of sub-data, each piece of sub-data among the N pieces of sub-data can be located in different CPRI frames, that is, a same CPRI frame does not include different pieces of sub-data. There may be a sending interval between two adjacent pieces of sub-data sent by the second communication unit. For example, the sending interval is equal to an interval between the two adjacent pieces of sub-data. In the continuous sending manner, to save transmission resources, a same CPRI frame can alternatively include different sub-data. In this case, different sub-data is isolated by using an interval field. In the continuous sending manner, the second communication unit can pack the N pieces of sub-data, and then compress the N pieces of sub-data as a whole.

In step 507, the first communication unit sends second instruction information to the second communication unit.

After the first communication unit receives a part of the first data, if the first communication unit does not need to receive a remaining part of the first data, the first communication unit sends the second instruction information to the second communication unit. For example, the first data includes the N pieces of sub-data. After receiving M pieces of sub-data among the N pieces of sub-data, the first communication unit obtains a good interference analysis result based on the M pieces of sub-data and the frequency-domain data. M is less than N. For another example, after receiving a part of data in the first data, the terminal device has disconnected association with the first communication unit. For example, the terminal device roams to another radio access device. In this case, the first communication unit does not need to continue to perform interference analysis on wireless communication between the terminal device and the second communication unit. The second instruction information may be a CPRI frame, an eCPRI frame, or the like. A format of the second instruction information and carried content are not limited in this embodiment of this application. The second instruction information indicates to stop sending the first data. It should be understood that the first communication unit can skip performing step 507, and wait for the second communication unit to complete sending the first data.

In step 508, the second communication unit stops sending the first data based on the second instruction information.

After receiving the second instruction information, the second communication unit stops sending the first data. It should be understood that when the first communication unit does not perform step 507, the second communication unit cannot receive the second instruction information. In this case, the second communication unit completes sending the first data.

In step 509, the second communication unit sends the frequency-domain data to the first communication unit.

The second communication unit receives an uplink wireless signal from the terminal device through the antenna, and converts the uplink wireless signal into an uplink electrical signal. The uplink electrical signal is the time-domain data. The second communication unit includes an FFT processing unit. The second communication unit performs Fourier transform on the time-domain data by using the FFT processing unit, to obtain frequency-domain data. The second communication unit sends the frequency-domain data to the first communication unit. It should be understood that there is no strictly limited time sequence relationship between step 509 and step 501 to step 508. Step 509 may be performed before step 501 to step 508, or may be performed after step 501 to step 508 or between step 501 to step 508.

It can be learned from the foregoing description of step 403 in FIG. 4 that the frequency-domain data includes the second data corresponding to the first data. In practice, to improve efficiency of matching the first data with the second data, the second communication unit can continuously send the first data and the second data. For example, an eCPRI frame includes the first data (or a part of data in the first data) and the second data (or a part of data in the second data). For another example, in two consecutive eCPRI frames, one eCPRI frame carries the first data (or a part of data in the first data), and the other eCPRI frame carries the second data (or a part of data in the second data).

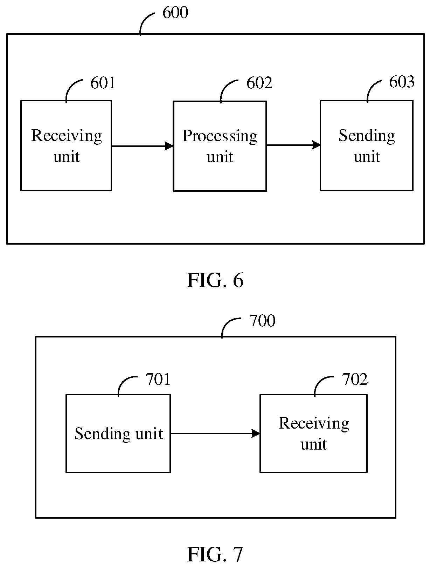

The foregoing describes the data transmission method provided in this application, and the following describes a communication unit and a communication system provided in this application. FIG. 6 is a diagram of a structure of a second communication unit according to an embodiment of this application. As shown in FIG. 6, the second communication unit 600 includes a receiving unit 601, a processing unit 602, and a sending unit 603. The receiving unit 601 is configured to receive first instruction information from a first communication unit. The processing unit 602 is configured to determine first data based on the first instruction information. The first instruction information indicates a start point of the first data in time-domain data and a size of the first data. The sending unit 603 is configured to send the first data to the first communication unit.

It should be understood that there is a similarity between the description of the second communication unit 600 and the description of the data transmission method in FIG. 4 or FIG. 5. Therefore, for a description of the second communication unit 600, refer to the description of the data transmission method in FIG. 4 or FIG. 5. For example, the receiving unit 601 is further configured to receive third instruction information and/or second instruction information from the first communication unit. The sending unit 603 is further configured to send reported capability information to the first communication unit based on the third instruction information. For another example, the sending unit 603 is further configured to send a response to the first instruction information to the first communication unit.

FIG. 7 is a diagram of a structure of a first communication unit according to an embodiment of this application. As shown in FIG. 7, the first communication unit 700 includes a sending unit 701 and a receiving unit 702. The sending unit 701 is configured to send first instruction information to a second communication unit. The first instruction information is used to determine a start point of first data in time-domain data and a size of the first data. The receiving unit 702 is configured to receive the first data from the second communication unit.

It should be understood that there is a similarity between the description of the first communication unit 700 and the description of the data transmission method in FIG. 4 or FIG. 5. Therefore, for a description of the first communication unit 700, refer to the description of the data transmission method in FIG. 4 or FIG. 5. For example, the receiving unit 702 is further configured to receive frequency-domain data from the second communication unit, where the frequency-domain data is obtained by performing Fourier transform on the time-domain data. For another example, the sending unit 701 is further configured to send second instruction information to the second communication unit, where the second instruction information indicates to stop sending the first data. For another example, the receiving unit 702 is further configured to receive a response to the first instruction information from the second communication unit.

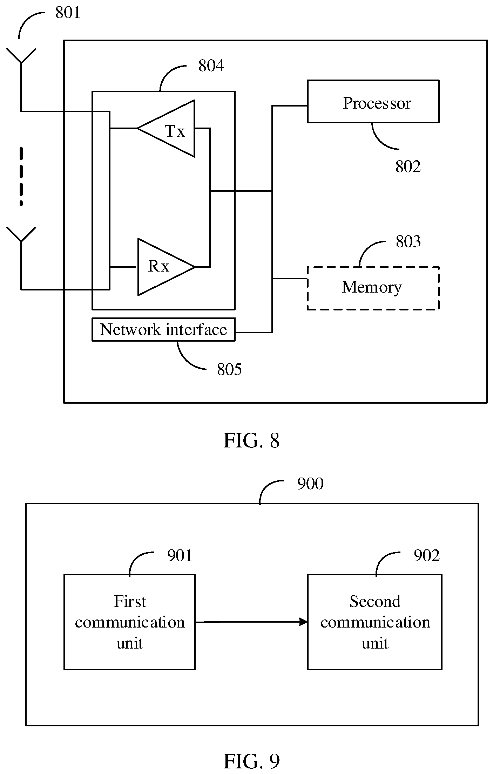

FIG. 8 is a diagram of a structure of a communication apparatus according to an embodiment of this application. The radio access network device may be specifically the first communication unit or the second communication unit in the foregoing example. As shown in FIG. 8, the radio access network device includes at least one processor 802 and at least one network interface 805.

Further optionally, the communication apparatus further includes at least one memory 803, at least one transceiver 804, and one or more antennas 801. The processor 802, the memory 803, the transceiver 804, and the network interface 805 are connected, for example, connected through a bus. In this application, the connection may include various types of interfaces, transmission lines, buses, or the like. This is not limited in this application. The antenna 801 is connected to the transceiver 804. The network interface 805 is configured to enable the communication apparatus to communicate with another communication device through a communication link. For example, the network interface 805 may include a network interface between the communication apparatus and a core network device, for example, an S1 interface. The network interface may include a network interface between the communication apparatus and another communication apparatus (for example, another network device or core network device), for example, an X2 or Xn interface.

For example, the processor 802 may be one or more field-programmable gate arrays (field-programmable gate arrays, FPGAs), application specific integrated circuits (application specific integrated circuits, ASICs), system-on-chips (system-on-chips, SoCs), central processing units (central processing units, CPUs), network processors (network processors, NPs), digital signal processors (digital signal processors, DSPs), micro controller units (micro controller units, MCUs), programmable logic devices (programmable logic devices, PLDs), or other integrated chips, or any combination of the foregoing chips or processors.

The processor 802 is mainly configured to: process a communication protocol and communication data, control the entire communication apparatus, execute a software program, and process data of the software program, for example, is configured to support the communication apparatus to perform actions described in the foregoing implementation process. The communication apparatus may include a baseband processor and a central processing unit. The baseband processor is mainly configured to process a communication protocol and communication data. The central processing unit is mainly configured to control an entire terminal device, execute the software program, and process the data of the software program. The processor 802 in FIG. 8 may integrate functions of the baseband processor and the central processing unit. A person skilled in the art may understand that the baseband processor and the central processing unit each may be an independent processor, and are interconnected through a technology like a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the memory in a form of software program, and the processor executes the software program to implement a baseband processing function.

The memory is mainly configured to store the software program and data. The memory 803 may exist independently, and is connected to the processor 802. Optionally, the memory 803 may be integrated with the processor 802, for example, integrated in a chip. The memory 803 can store program code for executing the technical solutions in this application, and the processor 802 controls the execution. Various types of executed computer program code may also be considered as a driver of the processor 802.

FIG. 8 shows only one memory and one processor. In an actual network device, there may be a plurality of processors and a plurality of memories. The memory may also be referred to as a storage medium, a storage device, or the like. The memory may be a storage element located on a same chip as the processor, namely, an on-chip storage element, or an independent storage element. This is not limited in this application.

The transceiver 804 may be configured to support receiving or sending of a radio frequency signal between the communication apparatus and a terminal. The transceiver 804 may be connected to the antenna 801. The transceiver 804 includes a transmitter Tx and a receiver Rx. Specifically, the one or more antennas 801 may receive a radio frequency signal. The receiver Rx of the transceiver 804 is configured to receive the radio frequency signal from the antenna, convert the radio frequency signal into a digital baseband signal or a digital intermediate frequency signal, and provide the digital baseband signal or the digital intermediate frequency signal for the processor 802, so that the processor 802 further processes the digital baseband signal or the digital intermediate frequency signal, for example, performs demodulation and decoding. In addition, the transmitter Tx of the transceiver 804 is further configured to: receive a modulated digital baseband signal or modulated digital intermediate frequency signal from the processor 802, convert the modulated digital baseband signal or the modulated digital intermediate frequency signal into a radio frequency signal, and send the radio frequency signal through the one or more antennas 801. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 804 may also be referred to as a transceiver module, a transceiver machine, a transceiver apparatus, or the like. Optionally, a component configured to implement a receiving function in the transceiver module may be considered as a receiving unit, and a component configured to implement a sending function in the transceiver module may be considered as a sending unit. In other words, the transceiver module includes the receiving unit and the sending unit. The receiving unit may also be referred to as a receiver, an input port, a receive circuit, or the like. The sending unit may be referred to as a transmitter machine, a transmitter, a transmit circuit, or the like.

It should be noted that the communication apparatus shown in FIG. 8 may be specifically configured to implement the steps implemented by the first communication unit or the second communication unit in the foregoing method, and implement technical effect corresponding to the first communication unit or the second communication unit. For a specific implementation of the communication apparatus shown in FIG. 8, refer to the descriptions in the foregoing method. Details are not described herein again.

FIG. 9 is a diagram of a structure of a communication system according to this application. As shown in FIG. 9, the communication system 900 includes a first communication unit 901 and a second communication unit 902. The second communication unit 902 may be the second communication unit 600 in FIG. 6 or the communication apparatus in FIG. 8. The first communication unit 901 may be the first communication unit 700 in FIG. 7 or the communication apparatus in FIG. 8. The first communication unit 901 is configured to send first instruction information to the second communication unit. The second communication unit 902 is configured to receive the first instruction information from the first communication unit 901. The second communication unit 902 is further configured to determine first data based on the first instruction information, where the first instruction information indicates a start point of the first data in time-domain data and a size of the first data. The second communication unit 902 is further configured to send the first data to the first communication unit 901. The first communication unit 901 is further configured to receive the first data from the second communication unit.

In this application, division into the modules is an example, and is merely logic function division. In actual implementation, another division manner may be used. In addition, functional modules in this application may be integrated into one processor, or may exist alone physically, or two or more modules may be integrated into one module. The integrated module may be implemented in a form of hardware, or may be implemented in a form of software functional module.

All or a part of the technical solutions provided in this application may be implemented by using software, hardware, firmware, or any combination thereof. When software is used to implement the solutions, all or a part of the solutions may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A data transmission method, comprising:
receiving first instruction information from a first communication unit;
determining first data based on the first instruction information, wherein the first instruction information indicates a start point of the first data in time-domain data and a size of the first data; and
sending the first data to the first communication unit.

2. The data transmission method according to claim 1, wherein the method further comprises:
sending frequency-domain data to the first communication unit, wherein the frequency-domain data is data obtained by performing Fourier transform on the time-domain data.

3. The data transmission method according to claim 1 or 2, wherein the first instruction information further indicates a collection frequency of the first data and/or a compression format of the first data.

4. The data transmission method according to claim 3, wherein the first data comprises N pieces of sub-data, N is an integer greater than 1, and the first instruction information further comprises a value of N and an interval between two adjacent pieces of sub-data among the N pieces of sub-data.

5. The data transmission method according to any one of claims 1 to 4, wherein the method further comprises:
receiving second instruction information from the first communication unit; and
stopping sending the first data based on the second instruction information.

6. The data transmission method according to any one of claims 1 to 5, wherein after receiving the first instruction information from the first communication unit, the method further comprises:
sending a response to the first instruction information to the first communication unit.

7. The data transmission method according to any one of claims 1 to 6, wherein before receiving the first instruction information from the first communication unit, the method further comprises:
receiving third instruction information from the first communication unit; and
sending reported capability information to the first communication unit based on the third instruction information.

8. The data transmission method according to claim 7, wherein the reported capability information comprises any one or more of the following: sending bandwidth, whether fragmentation is supported, and a size of each fragment.

9. A data transmission method, comprising:
sending first instruction information to a second communication unit, wherein the first instruction information indicates a start point of first data in time-domain data and a size of the first data; and
receiving the first data from the second communication unit.

10. The data transmission method according to claim 9, wherein the method further comprises:
receiving frequency-domain data from the second communication unit, wherein the frequency-domain data is obtained by performing Fourier transform on the time-domain data.

11. The data transmission method according to claim 9 or 10, wherein the first instruction information indicates a collection frequency of the first data and/or a compression format of the first data.

12. The data transmission method according to any one of claims 9 to 11, wherein the first data comprises N pieces of sub-data, N is an integer greater than 1, and the first instruction information further comprises a value of N and an interval between two adjacent pieces of sub-data among the N pieces of sub-data.

13. The data transmission method according to any one of claims 9 to 12, wherein the method further comprises:
sending second instruction information to the second communication unit, wherein the second instruction information indicates to stop sending the first data.

14. The data transmission method according to any one of claims 9 to 13, wherein after sending the first instruction information to the second communication unit, the method further comprises:
receiving a response to the first instruction information from the second communication unit.

15. The data transmission method according to any one of claims 9 to 14, wherein before sending the first instruction information to the second communication unit, the method further comprises:
sending third instruction information to the second communication unit, wherein the third instruction information indicates to reply with reported capability information.

16. The data transmission method according to claim 15, wherein the reported capability information comprises any one or more of the following: sending bandwidth, whether fragmentation is supported, and a size of each fragment.

17. A second communication unit, comprising a receiving unit, a processing unit, and a sending unit, wherein
the receiving unit is configured to receive first instruction information from a first communication unit;
the processing unit is configured to determine first data based on the first instruction information, wherein the first instruction information indicates a start point of the first data in time-domain data and a size of the first data; and
the sending unit is configured to send the first data to the first communication unit.

18. The second communication unit according to claim 17, wherein
the sending unit is further configured to send frequency-domain data to the first communication unit, wherein the frequency-domain data is data obtained by performing Fourier transform on the time-domain data.

19. The second communication unit according to claim 17 or 18, wherein
the receiving unit is further configured to receive second instruction information from the first communication unit; and
the sending unit is further configured to stop sending the first data based on the second instruction information.

20. The second communication unit according to any one of claims 17 to 19, wherein
the sending unit is further configured to send a response to the first instruction information to the first communication unit.

21. The second communication unit according to any one of claims 17 to 20, wherein
the receiving unit is further configured to receive third instruction information from the first communication unit; and
the sending unit is further configured to send reported capability information to the first communication unit based on the third instruction information.

22. A first communication unit, comprising a sending unit and a receiving unit, wherein
the sending unit is configured to send first instruction information to a second communication unit, wherein the first instruction information is used to determine a start point of first data in time-domain data and a size of the first data; and
the receiving unit is configured to receive the first data from the second communication unit.

23. The first communication unit according to claim 22, wherein
the receiving unit is further configured to receive frequency-domain data from the second communication unit, wherein the frequency-domain data is obtained by performing Fourier transform on the time-domain data.

24. The first communication unit according to claim 22 or 23, wherein
the sending unit is further configured to send second instruction information to the second communication unit, wherein the second instruction information indicates to stop sending the first data.

25. The first communication unit according to any one of claims 22 to 24, wherein
the receiving unit is further configured to receive a response to the first instruction information from the second communication unit.

26. The first communication unit according to any one of claims 22 to 25, wherein
the sending unit is further configured to send third instruction information to the second communication unit, wherein the third instruction information indicates to reply with reported capability information.

27. A second communication unit, comprising a processor and a transceiver, wherein
the transceiver is configured to receive first instruction information from a first communication unit;
the processor is configured to determine first data based on the first instruction information, wherein the first instruction information indicates a start point of the first data in time-domain data and a size of the first data; and
the transceiver is further configured to send the first data to the first communication unit.

28. A first communication unit, comprising a receiver and a transmitter, wherein
the transmitter is configured to send first instruction information to a second communication unit, wherein the first instruction information indicates a start point of first data in time-domain data and a size of the first data; and
the receiver is configured to receive the first data from the second communication unit.

29. A communication system, comprising the second communication unit according to claim 27 and the first communication unit according to claim 28.

30. A chip, wherein the chip comprises a processing circuit, and the processing circuit is configured to perform the method according to any one of claims 1 to 16.

31. A computer-readable storage medium, wherein the medium stores instructions, and when the instructions are executed by a computer, the method according to any one of claims 1 to 16 is implemented.

32. A computer program product, comprising instructions, wherein when the instructions are run on a computer, the computer is enabled to perform the method according to any one of claims 1 to 16.
